# EUROPEAN PATENT SPECIFICATION

(11) **EP 1 065 962 B1**
(45) Date of publication and mention of the grant of the patent: **14.11.2001**
(21) Application number: 99910668.5
(22) Date of filing: 23.03.1999
(51) Int. Cl.: A47J 42/20

(54) **COFFEE-GRINDER**
KAFFEE-MÜHLE
MOULIN A CAFE

(30) Priority: 30.03.1998 IT DA980051 U
(43) Date of publication of application: 10.01.2001
(73) Proprietor: LA SAN MARCO S.p.A., 34072 Gradisca D'Isonzo (IT)
(72) Inventor: Dalla Torre, Luigi, 34072 Gradisca d'Isonzo (GO) (IT)
(74) Representative: D'Agostini, Giovanni, Dr.
(86) International application number: IT9900069
(87) International publication number: WO9949768

(56) References cited:
- DE-U- 29 713 492
- GB-A- 906 233
- NL-A- 9 100 762

## Description

### Technical Field

The present invention has for object a coffee-grinder especially to grind coffee into grains ready for use in coffee machines.

### Background Art

In prior art, coffee-grinders to be generally used associated to a proportioning device, on the side of the espresso coffee machine, to deliver the ground coffee to said coffee machine, are known (DE.29713492U (cf preamble of claim 1); NL.9100762A; GB.906233A).

These coffee-grinders are generally made up of two generally conical and/or more or less flat annularly shaped toothed wheels, one of which turns while the other remains fixed, forcing the coffee grains to be crushed and then to be finely pulverized before flowing into the proportioning device.

The prior art drawbacks substantially are that the grinding is rough or in any event not regular enough.

Purpose of the present invention is that of avoiding the aforementioned drawbacks and substantially improving the grinding operations.

The problem is solved as claimed by means of a coffee-grinder of the type with grinding group having coaxial toothed wheels with a rotating toothed part, with respect to a fixed toothed crown, operating by internal charging of the grains and peripherally externally discharging the finely ground coffee, characterised in that:
- said fixed toothed crown is substantially flat with spiral-like toothing with decreasing pitch towards the periphery and fixed on an overhanging fixed supporting means;
- said rotating toothed part is made up of two parts:
- a substantially flat counter-crown similarly toothed to the fixed one, spiral-like with decreasing pitch towards the periphery to grind the beans progressively finer;
- on the inside of said fixed crown and said counter-crown, a pinion having a star-like pyramidal shape with a fin-shaped toothing which extends with grooves becoming always less deep towards the lower base periphery, which substantially develops for the entire height of said fixed crown and counter-crown, and whose toothing is aimed, with the upper wide pitch, at crushing the grains against the upper teeth of said fixed crown, to then convey them towards the annular mouth having a substantially horizontal "V" shaped section, for the subsequent grinding between said fixed crown and rotating counter-crown together with said pinion.

In this way, one has the advantage of obtaining a perfect grinding with the highest yield, quality and regularity of the ground product.

These and other advantages will appear from the following embodiments with the aid of the enclosed drawings, whose details are not to be considered limitative but only supplied as examples.

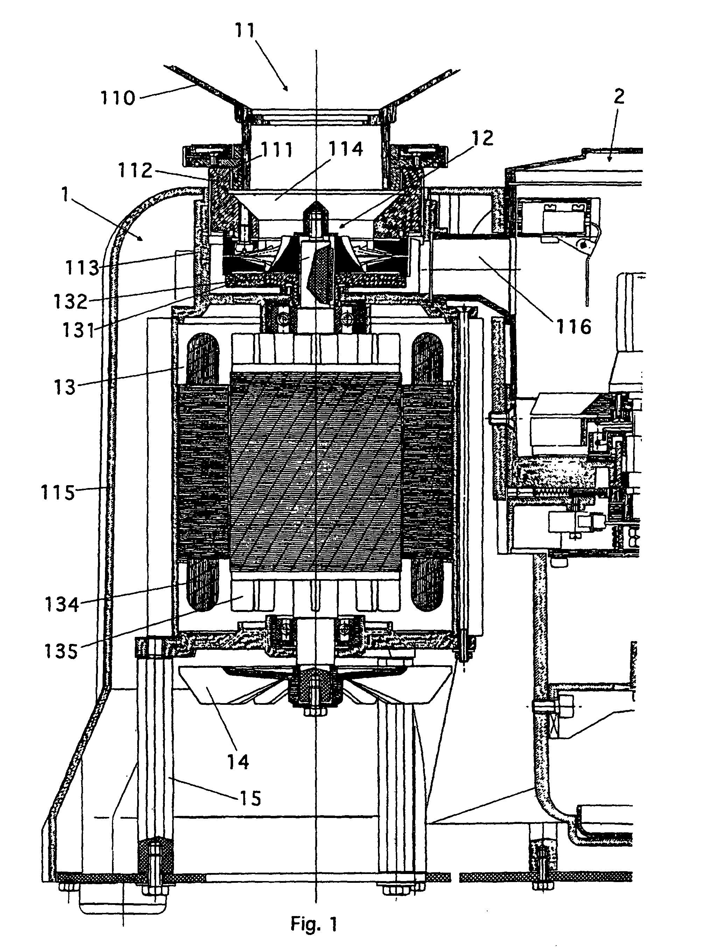

Figure 1 is a sectional view of the coffee-machine mounted on a coffee proportioning device together forming a grinder-proportioning device.

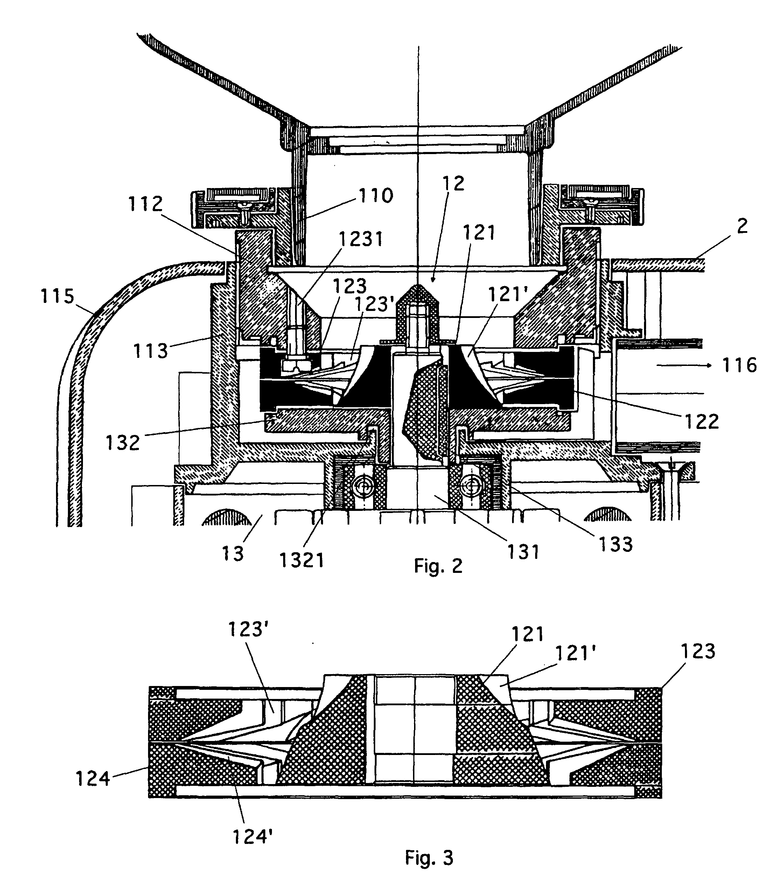

Fig. 2 is an enlarged view of the coffee-grinder grinding group.

Fig. 3 is an even larger view of the grinding group.

Fig. 4 is a partial sectional top view of the grinding group.

As claimed, the innovation concerns a coffee-grinder of the type with grinding group having coaxial toothed wheels (12) with a rotating toothed part with respect to a fixed toothed crown (123) with internal charging of the beans and peripheral discharge of the fine ground coffee (116), characterised in that:
- said fixed toothed crown (123) is substantially flat with spiral-like toothing with decreasing pitch towards the periphery and fixed on an overhanging fixed supporting means (112-1231);
- said rotating toothed part is made up of two parts:
   - a substantially flat counter-crown (122) toothed like the fixed one, spiral-like with decreasing pitch towards the periphery (122') to grind the beans into an always and progressively finer size (123' - 122');
   - inside of said fixed crown and said counter-crown, a pinion (121) having a star-like pyramidal shape (121') with a fin-like shaped toothing which extends with grooves becoming always less deep towards the periphery of the lower base (121"), which substantially develops for the whole height of said fixed crown (123) and counter-crown (122), and whose toothing is aimed, with the upper wide pitch (121') at crushing the beans against the upper teeth of said fixed crown (123'), to then convey them towards the annular mouth having a substantially horizontal "V" shaped section, for the subsequent grinding between said fixed crown (123) and rotating counter-crown (122) together with said pinion (121).

More in detail, according to the figures: 1 indicates the coffee-grinder and 2 indicates the proportioning device which receives the ground coffee from the periphery (116) of the grinding group (12) of the coffee-grinder.

The coffee-grinder has a hopper for the coffee (110) which determines a mouth of the coffee in grains which must be ground (11).

The hopper (110) rests on a support (111) which in turn rests on a counter-support (112) which supports a conveyance funnel (114) to the grinding group (12).

The whole is contained in a cylinder-like support (113) with side opening (116) for the pouring of the powdered ground coffee into the proportioning device (2).

The cylinder-like support (113), is embedded in the containing carter which makes up the coffee-grinder cover (115 ).

The cylinder-like support (113) is fixed to a vertical electric motor structure (13) supported by underlying uprights (15), able to be disassembled.

The rotor (135) of the electric motor (13) completed by the stator (134), has a fan (14) on the lower side, and on the upper side extends with a motor axis (131), which by means of a key (133) locks said star-like toothed pinion (121) of the grinding group (12).

The motor axis (131), also keys with said key (133) a supporting rotating washer (132), with labyrinth seal (1321), which supports by screw locking (1220) said counter-crown (122).

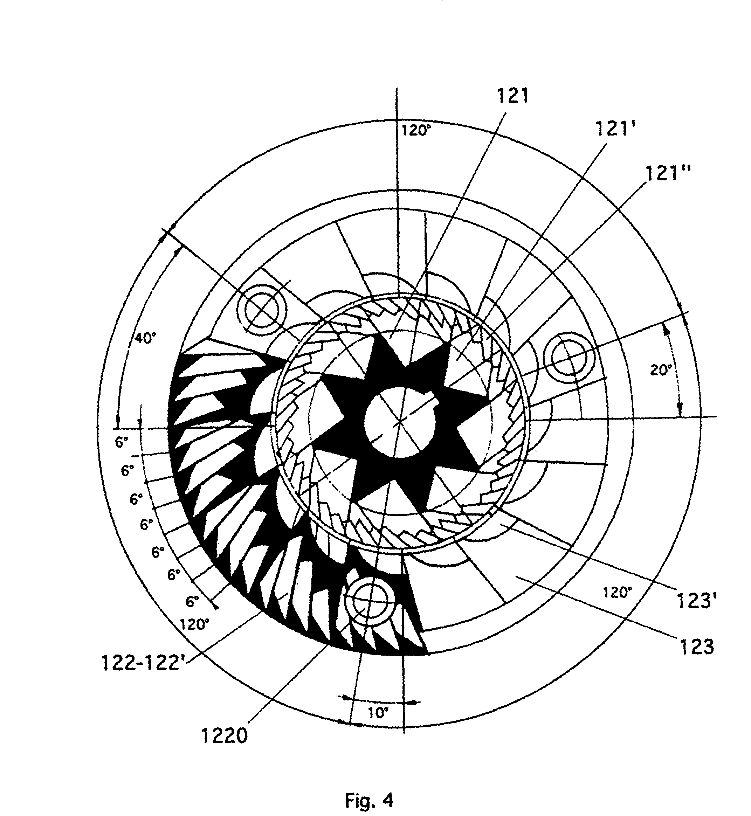

From Figure 4 it may be noticed that:
- said pinion has an eight-point star-like toothing.

The toothing of the crowns is substantially realised with a 6° pitch.

## Claims

1. Coffee-grinder of the type with grinding group having coaxial toothed wheels (12) with a rotating toothed part with respect to a fixed toothed crown (123), operating by internal charging of the grains and peripherally externally discharging the fine ground coffee (116), **characterised in that**:
- said fixed toothed crown (123) is substantially flat with spiral-like toothing with decreasing pitch towards the periphery and fixed on an overhanging fixed supporting means (112-1231);
- said rotating toothed part is made up of two parts:
- a substantially flat counter-crown (122) toothed like the fixed one, spiral-like with decreasing pitch towards the periphery (122') for grinding the grains into an always finer size (123' - 122');
- on the inside of said fixed crown and said counter-crown, a pinion (121) having a star-like pyramidal shape (121') with a fin-like shaped toothing which extends with grooves becoming always less deep towards the periphery of the lower base (121") which substantially develops for the whole height of said fixed crown (123) and counter-crown (122), and whose toothing is aimed, with the upper wide pitch (121') at crushing the grains against the upper teeth of said fixed crown (123'), to then convey them towards the annular mouth having a substantially horizontal "V" shaped section, for the subsequent grinding between said fixed crown (123) and said rotating counter-crown (122) together with said pinion (121).

2. Coffee-grinder according to claim 1., **characterised in that** its has a hopper for the coffee (110) which determines a mouth of the coffee in grains which must be ground (11), the hopper (110) resting on a support (111) which in turn rests on a counter-support (112) which supports a conveying funnel (114) to the grinding group (12).

3. Coffee-grinder according to the previous claims, **characterised in that** it comprises a cylinder-like support (113) which includes said grinding group (12), which is embedded in the containing carter (115) which makes up the coffee-grinder cover (1), such cylinder-like support (113) being fixed to a vertical electric motor structure (13) supported by underlying uprights (15), able to be disassembled, and in which the rotor (135) of said electric motor (13) completed by the stator (134), has a fan (14) on the lower side and on the upper side extends with a motor axis (131), which by means of a key (133) locks said star-like toothed pinion (121) of the grinding group 12 and a supporting rotating washer (132), which supports by screw locking (1220) said counter-crown (122).

4. Coffee-grinder according to the previous claims, **characterised in that** said pinion (121) has an eight-point star-like toothing (121').

5. Coffee-grinder according to the previous claims, **characterised in that** the crowns toothing is substantially realised with a 6° pitch.

6. Grinder-proportioning device involving a coffee-grinder according to any of the previous claims.

## Patentansprüche

1. Kaffeemühle mit Mahlgruppe mit koaxialen Zahnrädern (12) mit in bezug auf eine feste Zahnkrone (123) rotierendem gezähntem Teil, wobei die Körner nach innen eingebracht und der feingemahlene Kaffee (116) peripher nach außen entladen wird, **gekennzeichnet dadurch, dass**:
- besagte feste Zahnkrone (123) im wesentlichen flach mit spiralenähnlicher Verzahnung mit zum Rand hin abnehmender Teilung ist und an einer überhängenden Stütze befestigt ist (112-1231);
- besagtes rotierendes gezähntes Teil aus zwei Teilen besteht:
- einer im wesentlichen flachen Gegenkrone (122), die wie die feste gezähnt ist, spiralenähnlich mit zum Rand hin abnehmender Teilung (122'), um die Körner immer feiner zu mahlen (123 - 122');
- an der Innenseite besagter festen Krone und besagter Gegenkrone, ein Ritzel (121) mit einer sternähnlichen pyramidenförmigen Form (121') mit einer rippenähnlich geformten Verzahnung, die sich mit Rillen erstreckt, die zum Rand der unteren Basis (121") hin immer flacher werden und im wesentlichen über die gesamte Höhe von besagter fester Krone (123) und Gegenkrone (122) entwickelt sind, und dessen Verzahnung dazu dient, mit der oberen großen Teilung (121') die Körnern gegen die oberen Zähne von besagter fester Krone (123) zu zerkleinern, sie dann zu der ringförmigen Öffnung zu befördern, die einen im wesentlichen horizontalen "V"-förmigen Querschnitt aufweist, zum darauffolgenden Mahlen zwischen besagter fester Krone (123) und besagter rotierender Gegenkrone (122) zusammen mit besagtem Ritzel (121).

2. Kaffeemühle nach Anspruch 1., **gekennzeichnet dadurch, dass** sie einen Trichter für den Kaffee (110) aufweist, der eine Öffnung für den zu mahlenden Kaffee in Körnern bildet (11), wobei der Trichter (110) auf einer Stütze (111) ruht, die ihrerseits auf einer Gegenstütze (112) aufliegt, die einen
Fördertrichter (114) zu der Mahlgruppe (12) trägt.

3. Kaffeemühle nach den vorherigen Ansprüchen, **gekennzeichnet dadurch, dass** sie eine zylinderähnliche Stütze (113) umfasst, die besagte Mahlgruppe (12) umschließt, die in das Gehäuse (115) eingebettet ist, das die Kaffeemühlen-Decke (1) bildet, wobei die zylinderähnliche Stütze (113) an einem senkrechten Elektromotor (13) befestigt ist, der von Pfosten (15) getragen wird, die entfernbar sind, und wobei der Rotor (135) von besagtem elektrischen Motor (13), der vom Ständer (134) vervollständigt wird, ein Gebläse (14) aufweist, und sich auf der unteren Seite und auf der oberen Seite mit einer Motorachse (131) erstreckt, die mittels eines Schlüssels (133) besagtes sternähnliches gezähntes Ritzel (121) von der Mahigruppe 12 blockiert, und eine rotierende Stütz-Unterlegscheibe (132), die durch Schraubverschluß (1220) besagte Gegenkrone (122) trägt.

4. Kaffeemühle nach den vorherigen Ansprüchen, **gekennzeichnet dadurch, dass** besagte Ritzel (121) eine sternähnliche Acht-Punkte-Verzahnung (121) aufweist.

5. Kaffeemühle nach den vorherigen Ansprüchen, **gekennzeichnet dadurch, dass** die Zähnung der Kronen im wesentlichen eine 6- Zähnung ist.

6. Kaffemühlenproportionierungs-Vorrichtung unter Zuhilfenahme einer Kaffeemühle nach einem beliebigen der vorherigen Patentansprüche.

## Revendications

1. Moulin à café du type avec groupe de moulure ayant des roues dentées concentriques (12) avec une partie dentée de rotation par rapport à une couronne dentée fixée (123), operant par le chargement interne des grains et déchargement périphérique à l'extérieur du café moulu final (116), **caractérisé en ce que**:
- ladite couronne dentée fixée (123) est substantiellement plate avec une denture du type en spirale à pas décroissant vers la périphérie et fixée sur un moyen de support fixe à surplomb (112-1231);
- ladite partie dentée de rotation est composée de deux parties:
- une contre-couronne (122) substantiellement plate dentée comme la couronne fixe, du type de spiral à pas décroissant vers la périphérie (122) pour moudre les grains pour obtenir une taille plus fine (123 - 122);
- à l'intérieur de ladite couronne fixe et ladite contre-couronne, un aileron (121) ayant une forme pyramidale du type d'étoile (121) avec une denture ayant forme du type d'ailette qui s'étend avec des rainures devenant toujours moins profondes vers la périphérie de la base inférieure (121") qui se développe substantiellement le long de la hauteur entière de ladite couronne fixe (123) et contre-couronne (122), et dont la denture, avec le pas supérieur large (121) à triturer les grains contre les dents supérieures de ladite couronne fixe (123), pour les transporter ensuite vers l'ouverture annulaire ayant une section formée substantiellement en "V" horizontale, pour la moulure postérieure entre ladite couronne fixée (123) et ladite contre-couronne de rotation (122) ainsi que ledit aileron (121).

2. Moulin à café selon la revendication 1., **caractérisé en ce qu'**il a une trémie pour le café (110) qui détermine un orifice pour le café en grains à moudre (11), la trémie (110) reposant sur un support (111) lequel pour sa part repose sur un *contre-support* (112) qui supporte un entonnoir d'envoi (114) au groupe de moulure (12).

3. Moulin à café selon les revendications antérieures, **caractérisé en ce qu'**il comprend un support du type de cylindre (113) lequel inclut ledit groupe de moulure (12), enfoncé dans le logement (115) qui constitue la couverture du moulin à café (1), ce support du type de cylindre (113) étant fixé à une structure verticale de moteur électrique (13) supporté par des colonnes situées en-dessous (15), apte à être désassemblé, et où le rotor (135) dudit moteur électrique (13), complété par le stator (134), présente un ventilateur (14) sur le côté inférieur et sur le côté supérieur il s'étend avec un axe de moteur (131), lequel moyennant une clef (133) ferme ledit aileron denté du type d'étoile (121) du groupe de moulure 12 et une assiette de support tournante (132), qui supporte ladite contre-couronne (122) par blocage moyennant un vis (1220).

4. Moulin à café selon les revendications antérieures, **caractérisé en ce que** ledit aileron (121) présente une denture du type d'étoile à huit points (121).

5. Moulin à café selon les revendications antérieures, **caractérisé en ce que** la couronne dentée est substantiellement réalisée avec un pas de 6°.

6. Dispositif de moulin à café de proportionnement qui implique un moulin à café selon n'importe quelle des revendications antérieures.
